# EUROPEAN PATENT APPLICATION

(11) **EP 4 803 995 A1**
(43) Date of publication of application: **09.09.2026**
(21) Application number: 26160046.4
(22) Date of filing: 23.02.2026
(51) Int. Cl.: G06F 3/0482, G06F 40/242

(54) **PROGRAM, INFORMATION PROCESSING METHOD, AN INFORMATION PROCESSING APPARATUS, AND INFORMATION PROCESSING SYSTEM**

(30) Priority: 04.03.2025 JP 2025033621
(71) Applicant: Casio Computer Co., Ltd., Tokyo 151-8543 (JP)
(72) Inventor: Ito, Masahiro, Hamura-shi, Tokyo, 205-8555 (JP)
(74) Representative: Grünecker Patent- und Rechtsanwälte PartG mbB

(57) **Abstract**

A program (121) causes a computer (11) to function as a determination unit and a display controller. The determination unit determines whether a certain character string (243a) displayed on a browser has been selected by an operation of a user. When the determination unit determines that the character string has been selected, the display controller causes the browser to display an instruction tool (243b). The instruction tool is for giving an instruction to search a dictionary content of a learning support system (1) for the selected character string.

## Description

### BACKGROUND OF THE INVENTION

### TECHNICAL FIELD

The present disclosure relates to a program, an information processing method, an information processing apparatus, and an information processing system.

### DESCRIPTION OF RELATED ART

A known dictionary search system searches dictionaries for a headword entered by a user and shows the search result of the headword in a window (see Japanese unexamined Patent Application Publication No. 2000-99522).

### SUMMARY OF THE INVENTION

When a user wants to search dictionaries for a character string displayed on a website, the user needs to manually input the character string in a headword input section of the above dictionary search system. This takes time and effort for the user to look up the character string displayed on the website.

An object of the present disclosure is to provide a program, an information processing method, an information processing apparatus, and an information processing system that can save time and effort of the user in searching dictionaries for a character string displayed on a browser.

To solve the above problem, a program causes a computer to function as a determination unit and a display controller, wherein: the determination unit determines whether a certain character string displayed on a browser has been selected by an operation of a user, and in response to the determination unit determining that the character string has been selected, the display controller causes the browser to display an instruction tool for giving an instruction to search a dictionary content of a learning support system for the selected character string.

### EFFECTS OF THE INVENTION

According to the present disclosure, the user can save time and effort for searching dictionaries for a character string displayed on a browser.

### BRIEF DESCRIPTION OF DRAWINGS

FIG. 1 is a block diagram of a learning support system according to an embodiment.
FIG. 2 is a block diagram of the functional configuration of a server.
FIG. 3 is a block diagram of the functional configuration of a terminal device.
FIG. 4 is a flowchart of a first search process.
FIG. 5 is an example of a menu screen of a learning support service displayed by a web browser.
FIG. 6 is an example of a dictionary contents screen displayed by the web browser.
FIG. 7 is a flowchart of a second search process.
FIG. 8 is an example of a search menu on a website displayed by the web browser.
FIG. 9 is an example of a search menu on the website displayed by the web browser.
FIG. 10 is an example of a dictionary contents screen displayed by the web browser.
FIG. 11 is an example of an error screen displayed by the web browser.
FIG. 12 is an example of a login screen displayed by the web browser.

### DETAILED DESCRIPTION

Hereinafter, an embodiment of the present disclosure will be described in detail with reference to the drawings. The following embodiment is provided with various limitations technically preferable for carrying out the present disclosure. However, the scope of the present disclosure is not limited to the embodiment below or illustrated examples.

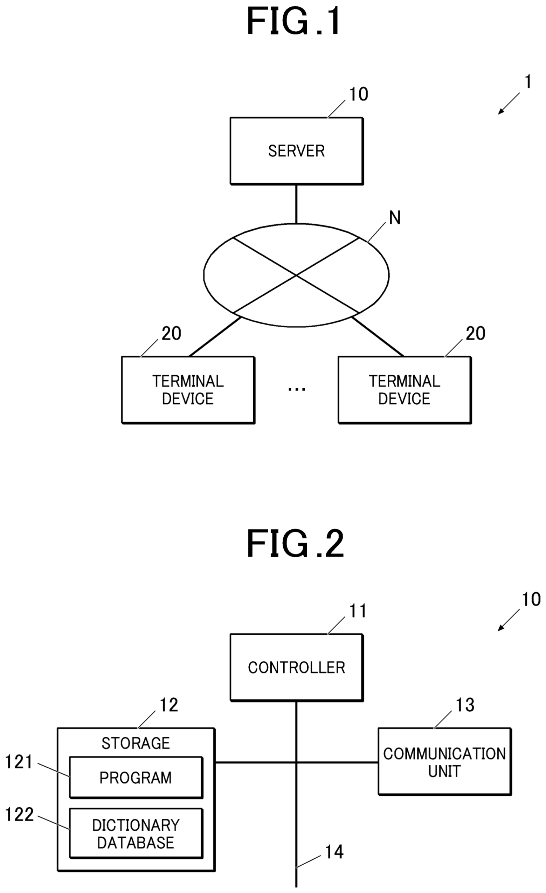

As shown in FIG. 1, a learning support system 1 (information processing system) includes a server 10 (information processing apparatus) and a terminal device(s) 20. The server 10 and the terminal device 20 are communicatively connected to each other over a communication network N. The communication network N may be any communication network, such as the Internet, wireless LAN (Local Area Network), wired LAN, mobile communication network, short-range wireless communication network, or a combination of some or all of these networks, for example. The number of the terminal devices 20 is not limited to a specific number. The learning support system 1 provides a learning support service. As the learning support service, the learning support system 1 supports students attending classes at educational institutions in creating notebooks for classes, using online dictionaries and mathematic tools, and doing and submitting homework assigned by teachers, for example. The learning support service is provided to users whose account information (e.g., user ID and password, group ID and password) has been registered with the server 10.

When accessed by the terminal device 20, the server 10 provides the learning support service over the Web or reads information stored in a dictionary database 122 (see FIG. 2) and sends the information to the terminal device 20, for example. The server 10 includes a controller 11, a storage 12, and a communication unit 13, as shown in FIG. 2. These components are connected to each other via a system bus 14. The controller 11 includes a central processing unit (CPU) and a random-access memory (RAM). The CPU of the controller 11 is a processor that reads a program 121 stored in the storage 12, loads the program into the RAM, and executes the program to perform various arithmetic processes and control operations of the components of the server 10. The communication unit 13 performs communication operations in accordance with a predetermined communication protocol. By the communication operations, the communication unit 13 sends and receives data to and from the terminal device 20 over the communication network N.

The storage 12 is a non-transitory storage medium readable by the CPU of the controller 11. The storage 12 stores the program 121 and various kinds of data. The storage 12 includes a nonvolatile memory, such as a hard disk drive (HDD) or a solid-state drive (SSD). The program 121 includes a program to be executed on the web browser (browser) launched on the terminal device 20 to provide the learning support service. The browser is software that receives website data by connecting to the web server and displays the website. The program 121 includes a program for executing a second search process, which is described later.

The storage 12 stores a dictionary database 122. The dictionary database 122 stores dictionary contents available to users in the learning support service. In the dictionary contents, each headword is associated with explanatory information that explains the headword. The dictionary database 122 in this embodiment stores dictionary contents related to multiple kinds of dictionaries. The dictionaries are not limited to specific kinds, as long as headwords are associated with their corresponding explanatory information. The kinds of dictionaries include language dictionaries, such as a dictionary of Japanese language and an English-Japanese dictionary, encyclopedias, and terminology dictionaries in various fields, such as a physics dictionary and a chemistry dictionary. The dictionary database 122 stores the dictionary contents in association with information on corresponding dictionary titles, dictionary thumbnail images, and so forth. The dictionary title is the title of an electronic dictionary. The dictionary thumbnail image is image data of the thumbnail image of a dictionary, such as the front cover of the dictionary. The dictionary contents in this embodiment are the contents published by publishers, for example. In the dictionary database 122, each dictionary content is stored in association with user IDs and/or group IDs of accounts that can use the dictionary content. The user ID is information that identifies an individual user of the learning support service. The group ID is information that identifies a group to which users belong. The group ID is, for example, a school ID.

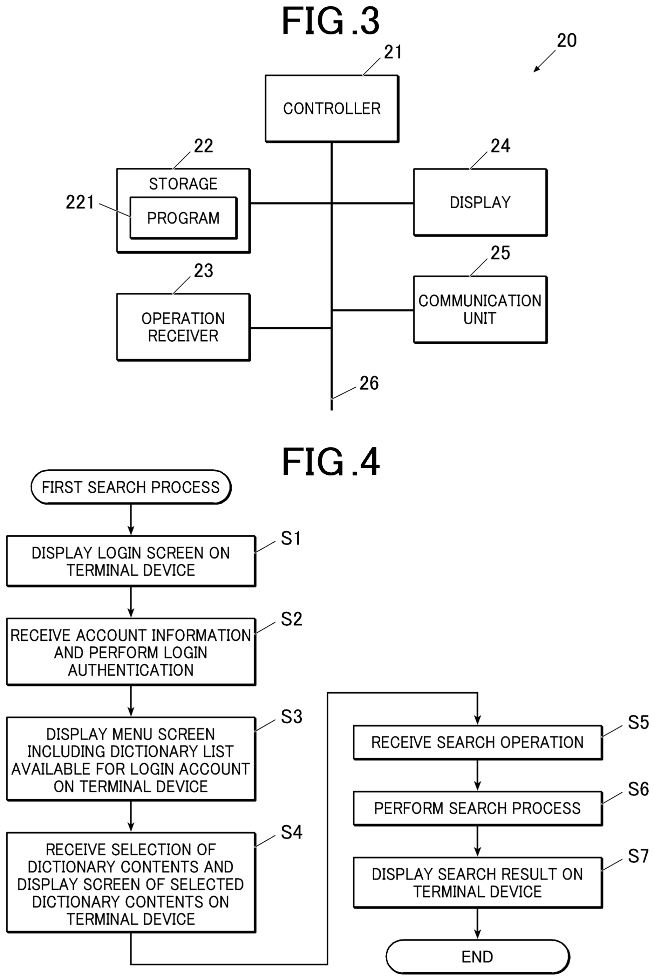

The terminal device 20 is an information processing apparatus used by teachers, students, and so forth of an educational institution. The terminal device 20 is a notebook PC, for example. The terminal device 20 is not limited to a notebook PC but may be any other information processing apparatus, such as a desktop PC, tablet PC, or smartphone. As shown in FIG. 3, the terminal device 20 includes a controller 21, a storage 22, an operation receiver 23, a display 24, and a communication unit 25. These components are connected to each other via a system bus 26.

The controller 21 includes a CPU and a RAM. The CPU of the controller 21 is a processor that reads a program 221 stored in the storage 22, loads the program into the RAM, and executes the program to perform various arithmetic processes and control operations of the components of the terminal device 20. The storage 22 is a non-transitory storage medium readable by the CPU of the controller 21. The storage 22 stores the program 221 and various kinds of data. The storage 22 includes a non-volatile memory, such as an HDD and/or an SSD. The program 221 stored in the storage 22 includes a browser.

The operation receiver 23 includes a keyboard having various keys and a pointing device that receives position inputs. The operation receiver 23 receives operation inputs by the user, such as key inputs and position inputs, and outputs the operation information to the controller 21. Herin, the operation receiver 23 includes a mouse as the pointing device. The operation receiver 23 may also include a touchscreen integrally formed on the display panel of the display 24 and receive touch inputs by the user. The display 24 includes a liquid crystal display (LCD) or electro luminescence (EL) display. The display 24 displays various contents in accordance with display information instructed by the controller 21. The communication unit 25 performs communication operations in accordance with a predetermined communication protocol. By the communication operations, the communication unit 25 sends and receives data to and from the server 10 over the communication network N.

Next, operations of the learning support system 1 are described. Hereinafter, the operations of the learning support system 1 are described when the user uses the dictionary search function in the learning support service provided by the learning support system 1.

First, a first search process (see FIG. 4) is described. The first search process is a conventional search process to be executed by the learning support system 1. When the user at the terminal device 20 inputs an instruction to execute the browser via the operation receiver 23, the controller 21 receives the input as a trigger and executes the browser in accordance with the program 221. At the terminal device 20 executing the browser, when the user inputs the URL of the web page that provides the learning support service with the operation receiver 23, the controller 21 receives the input as a trigger and, using the input URL, sends a request that the user log in to the learning support service to the server 10. At the server 10, when the controller 11 receives the login request to the learning support service from the terminal device 20, the controller 11 performs the following process in accordance with the program 121 in the storage 12. First, the controller 11 generates login screen data for the user to log in to the learning support service and sends the data to the terminal device 20 that has sent the login request. At the terminal device 20, the controller 21 receives the login screen data for logging in to the learning support service from the server 10 and displays the data on the display 24. That is, the controller 11 displays the login screen for logging in to the learning support service on the terminal device 20 (Step S1).

Next, the controller 21 receives inputs of the user ID and password or the group ID and password (account information) by the user operating the operation receiver 23. The controller 21 sends the input account information to the server 10. At the server 10, when receiving the account information from the terminal device 20, the controller 11 performs login authentication for the user to log in to the learning support service, based on the account information (Step S2). When the login authentication of the user is successful, a login session to the learning support service is started between the server 10 and the browser of terminal device 20. The login session expires and becomes invalid after a predetermined period elapses from the start of the session.

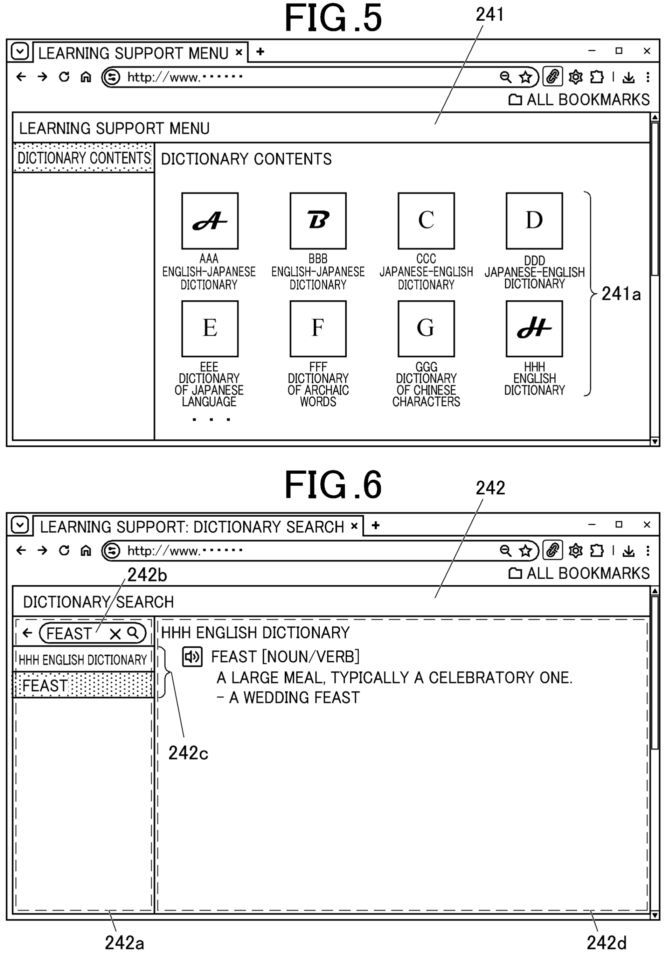

Next, the controller 11 sends, to the terminal device 20 that has performed the login authentication, screen data of a menu screen 241 (see FIG. 5). The menu screen 241 is displayed by the browser and provides the learning support service. At the terminal device 20, when receiving the screen data of the menu screen 241 from the server 10, the controller 11 displays the menu screen 241 on the display 24 in cooperation with the browser. As shown in FIG. 5, the menu screen 241 shows a dictionary list 241a for the user to select dictionary contents to be used. The controller 11 of the server 10 reads the dictionary titles and thumbnail images of the dictionary contents associated with the user ID or group ID (the account that was successful in the login authentication) from the dictionary database 122. The controller 11 then displays the read dictionary titles and thumbnail images of the respective dictionary contents as the dictionary list 241a. That is, the controller 11 displays, on the display 24 of the terminal device 20, the menu screen 241 including the dictionary list 241a, which is a list of dictionary contents available to the login account (Step S3).

At the terminal device 20, when the user selects the thumbnail image of any dictionary content in the dictionary list 241a via the operation receiver 23, the controller 21 sends information on the selection of the dictionary content to the server 10. At the server 10, when the controller 11 receives the information on the selection of the dictionary content from the terminal device 20, the controller 11 sends screen data of a dictionary contents screen 242 (see FIG. 6) to the terminal device 20. The dictionary contents screen 242 is displayed by the browser and shows the dictionary contents selected by the user. At the terminal device 20, when receiving the screen data of the dictionary contents screen 242 from the server 10, the controller 21 displays the dictionary contents screen 242 on the display 24 in cooperation with the browser. That is, the controller 11 displays the dictionary contents screen 242 that shows the dictionary contents selected by the user on the display 24 of the terminal device 20 (Step S4).

As shown in FIG. 6, the dictionary contents screen 242 includes a search section 242a. At the terminal device 20, the controller 21 receives input of a character string in the input field 242b of the search section 242a by the user operating the operation receiver 23. The controller 21 sends first search operation information to the server 10. The first search operation information indicates an instruction to perform a search process for the input character string. At the server 10, the controller 11 receives the first search operation information from the terminal device 20, thereby receiving the search operation (Step S5). Based on the received first search operation information, the controller 11 executes a search process of searching the dictionary contents selected in Step S4 for the headword corresponding to the character string for which the search process has been instructed (Step S6). In Step S6, the controller 11 obtains the headword corresponding to the character string for which the search process has been instructed and the explanatory information corresponding to the headword from the dictionary contents selected in Step S4.

Next, the controller 11 displays the results of the search process in Step S6 on the dictionary contents screen 242 of the display 24 of the terminal device 20 displayed by the browser (Step S7). The controller 11 then ends the first search process. In Step S7, the controller 11 displays the headword obtained from the dictionary contents in the list field 242c of the search section 242a. The controller 11 displays the explanatory information obtained from the dictionary contents in the contents section 242d of the dictionary contents screen 242.

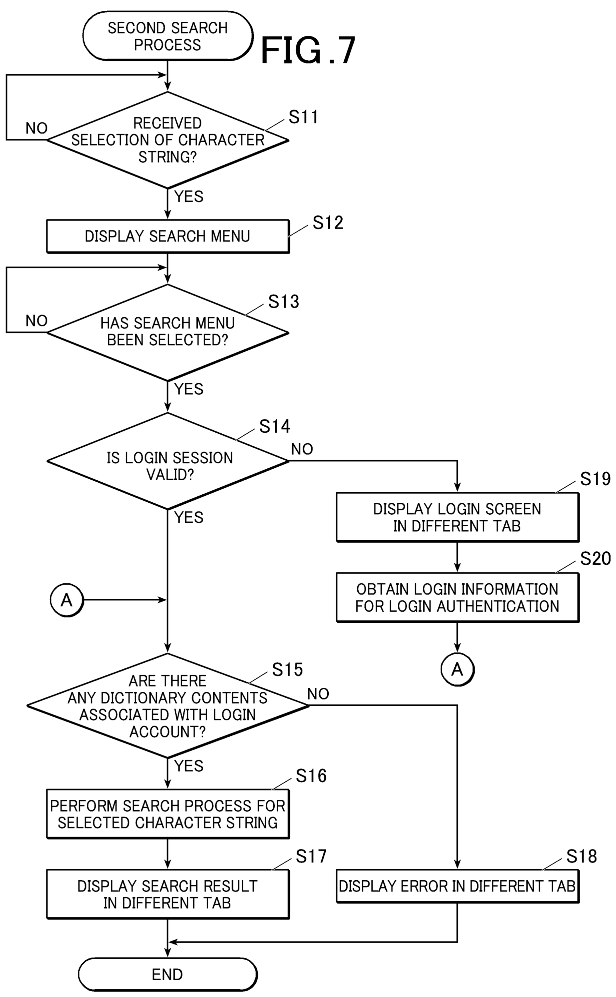

Next, a second search process (see FIG. 7) to be performed by the learning support system 1 in this embodiment is described. The controller 11 of the server 10 performs the second search process in cooperation with an add-in program that realizes extension of the browser launched on the terminal device 20.

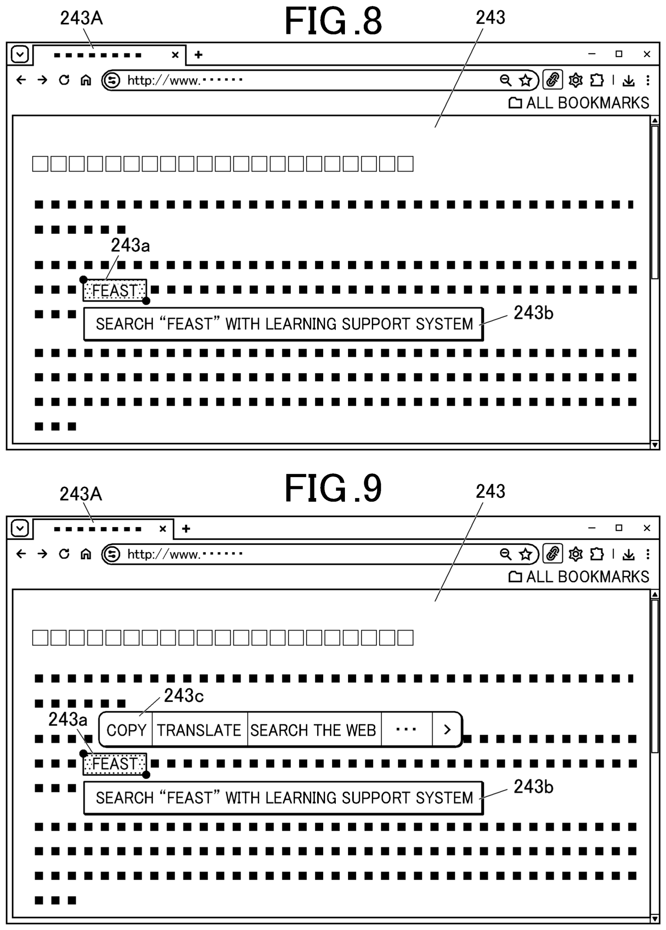

First, at the terminal device 20, when the user inputs an instruction to execute the browser by operating the operation receiver 23, the controller 21 receives the input as a trigger and executes the browser in accordance with the program 221. Next, at the terminal device 20 executing the browser, the controller 21 displays a screen of a predetermined website (a website screen 243) in response to user operation via the operation receiver 23. The website screen 243 is displayed in a first tab 243A of the browser displayed on the display 24, as shown in FIG. 8 and FIG. 9. The controller 21 receives a selection operation of a certain character string on the texts displayed on the website screen 243. The selection operation is, for example, a drag operation on the certain character string by the user with the operation receiver 23. The controller 21 sends information on the selected character string 243a (selected character string information) to the server 10. In the example shown in FIG. 8 and FIG. 9, the character string "feast" is selected as the selected character string 243a by the user's operation. The number of characters in the selected character string 243a is equal to or less than a predetermined first number of characters. The first number of characters is, for example, 30 characters in Japanese or 30 alphabetical characters. When receiving the user's drag operation on a character string containing characters equal to or more than the first number, the controller 21 deletes characters exceeding the first number of characters to set the selected character string 243a.

At the server 10, the controller 11 determines whether the selection of a certain character string by the user operation has been received on the website screen 243 (Step S11). In Step S11, the controller 11 determines whether a certain character string displayed on the browser has been selected by the user operation. The controller 11 functions as a determination unit. Step S11 is a determination step. When the selection of a certain character string has not been received (Step S11: NO), namely when the controller 11 has not received the selected character string information from the terminal device 20, the controller 11 returns to Step S11 in the second search process.

On the other hand, when the selection of a certain character string has been received (Step S11: YES), namely when the controller 11 receives the selected character string information from the terminal device 20, the controller 11 displays a search menu 243b (search button, search icon) on the website screen 243 (Step S12). The search menu 243b is displayed near the selected character string 243a within a predetermined distance from the selected character string 243a. For example, as shown in FIG. 8 and FIG. 9, the controller 11 displays the search menu 243b at a position a predetermined distance below the selected character string 243a in Step S12. That is, when the controller 11 (determination unit) determines that a certain character string displayed on the browser has been selected, the controller 11 causes the browser to display an instruction tool (search menu 243b) for the user to give instructions to search the dictionary contents of the learning support system 1 for the selected character string. The controller 11 functions as a display controller. Step S12 is a display control step. In this description, the processes performed by the controller 11 on the screen displayed by the browser running on the terminal device 20 (e.g., the process of displaying the search menu 243b on the website screen 243, the process of displaying a dictionary contents screen 244 (described later) including the results of the search process for the selected character string 243a in a second tab 244A, the process of displaying an error screen 245 in a third tab 245A, the process of displaying the login screen 246 for logging in to the learning support service in a fourth tab 246A) include the process of generating control data for the controller 21 to perform these processes in cooperation with the browser and sending the data to the terminal device 20 via the communication unit 13. In other words, when it is determined in the determination step that a certain character string displayed on the browser has been selected, the display control step includes generating data for displaying the instruction tool (search menu 243b), which is for giving an instruction to search the dictionary contents of the learning support system 1 for the selected character string, and sending the generated data to the terminal device 20 via the communication unit 13.

The search menu 243b is an instruction tool for giving an instruction to search the dictionary contents of the learning support system 1 for the selected character string 243a. For example, as shown in FIG. 8 and FIG. 9, the controller 11 displays a character string including the selected character string 243a saying "search for "feast" with learning support system" in the search menu 243b. In other words, the controller 11 displays a predetermined explanatory text related to the learning support system 1 (explanatory text indicating that the selected character string is to be looked up by the learning support system 1) in the search menu 243b. When the number of characters constituting the selected character string 243a is equal to or greater than the predetermined second number of characters, the controller 11 omits characters of the selected character string 243a exceeding the second number in displaying the selected character string 243a in the search menu 243b.

As shown in FIG. 9, when the browser launched on the terminal device 20 has a function of displaying another menu 243c different from the search menu 243b near the selected character string 243a, the controller 11 displays the search menu 243b near the selected character string 243a so as not to overlap the other menu 243c. For example, as shown in FIG. 9, the controller 11 displays the search menu 243b at the opposite side of the other menu 243c with the selected character string 243a in between. For another example, the controller 11 may display the search menu 243b above or below the other menu 243c. For another example, in the website screen 243, the controller 11 may display the search menu 243b in a direction in which the distance between the selected character string 243a and the window frame of the website screen 243 is longer. For another example, the controller 11 may display the search menu 243b in a way different from the other menu 243c. For example, the search menu 243b may be displayed more conspicuously with a louder color or a bolder type than the other menu 243c. The controller 11 may hide the search menu 243b after an elapse of a predetermined time. The predetermined time until the search menu 243b is hidden is, for example, 2.5 seconds.

At the terminal device 20, when receiving a click operation on the search menu 243b by the user operating the operation receiver 23, the controller 21 sends, to the server 10, second search operation information indicating that the click operation has been made on the search menu 243b. At the server 10, the controller 11 determines whether the search menu 243b displayed on the website screen 243 has been selected by the user (Step S13). When determining that the search menu 243b has not been selected (Step S13: NO), namely when the controller 11 has not received the second search operation information from the terminal device 20, the controller 11 returns to Step S13 in the second search process.

On the other hand, when the search menu 243b has been selected (Step S13: YES), namely when the controller 11 has received the second search operation information from the terminal device 20, the controller 11 determines whether the login session to the learning support service is valid between the server 10 and the browser of the terminal device 20 (Step S14). When the login session to the learning support service is valid (Step S14: YES), the controller 11 determines whether the dictionary database 122 stores the dictionary contents associated with the user ID/group ID of the account corresponding to the login session (the login account having logged in) (Step S15).

When the dictionary database 122 stores the dictionary contents associated with the user ID or group ID of the login account (Step S15: YES), the controller 11 performs a search process of searching the search target dictionary contents for the headword corresponding to the selected character string 243a (Step S16). The search target dictionary contents are the dictionary contents associated with the user ID or group ID of the login account. In Step S16, when multiple dictionary contents are associated with the user ID or group ID of the login account, the controller 11 searches the multiple dictionary contents simultaneously for the headword corresponding to the selected character string 243a (bulk search).

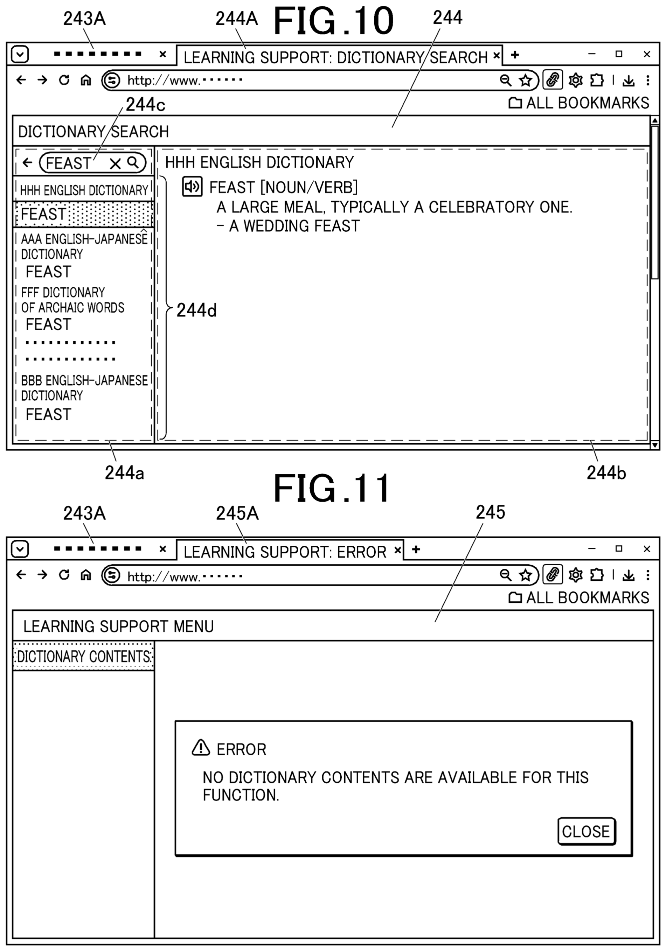

Next, the controller 11 displays the dictionary contents screen 244 including the results of the search process in Step S16 for the selected character string 243a (Step S17). On the display 24 of the terminal device 20, the dictionary contents screen 244 is displayed in a second tab 244A (see FIG. 10) different from the first tab 243A, which displays the website screen 243 containing the selected character string 243a of the browser. The controller 11 then ends the second search process. In Step S17, when the screen that provides the learning support service (e.g., the menu screen 241, the dictionary contents screen 242) has already been displayed in a tab (second tab 244A) different from the first tab 243A on the display 24 of the terminal device 20 by the browser, the controller 11 displays the dictionary contents screen 244 in the second tab 244A having already been opened. On the other hand, when the screen that provides the learning support service is not displayed in a tab different from the first tab 243A, the controller 11 opens the second tab 244A different from the first tab 243A on the browser and displays the dictionary contents screen 244 in the second tab 244A.

As shown in FIG. 10, the dictionary contents screen 244 includes a search section 244a and a contents section 244b. The controller 11 displays the selected character string 243a, which is searched for in the search process of Step S16, in the input field 244c of the search section 244a. The controller 11 displays a list of headwords that correspond to the selected character string 243a and that are obtained from the search target dictionary contents in the search process of Step S16 in the list field 244d of the search section 244a. In the list field 244d, the headwords are displayed in association with the corresponding dictionary titles. The controller 11 receives an operation of selecting one headword from the list of headwords displayed in the list field 244d by the user operating the operation receiver 23 of the terminal device 20. The controller 11 obtains explanatory information corresponding to the headword selected by the user from the dictionary contents. The controller 11 then displays the obtained explanatory information in the contents section 244b. When none of the headwords in the list is selected by the user, the controller 11 may obtain explanatory information corresponding to the topmost headword in the list field 244d from the dictionary contents and display the obtained explanatory information in the contents section 244b.

As shown in FIG. 6 and FIG. 10, the dictionary contents screen 242 displayed by the first search process and the dictionary contents screen 244 displayed by the second search process are similar. Therefore, the user who is familiar with the dictionary contents screen 242 of the first search process can easily grasp the contents of the dictionary contents screen 244 of the second search process.

On the other hand, when the dictionary database 122 does not store the dictionary contents associated with the user ID or group ID of the login account (Step S15: NO), the controller 11 displays an error screen 245 on the browser of the terminal device 20 (Step S18). The error screen 245 is displayed in a third tab 245A (see FIG. 11) different from the first tab 243A, which displays the website screen 243 including the selected character string 243a. The controller 11 then ends the second search process. As shown in FIG. 11, in the error screen 245, the controller 11 indicates that no search target dictionary contents are available.

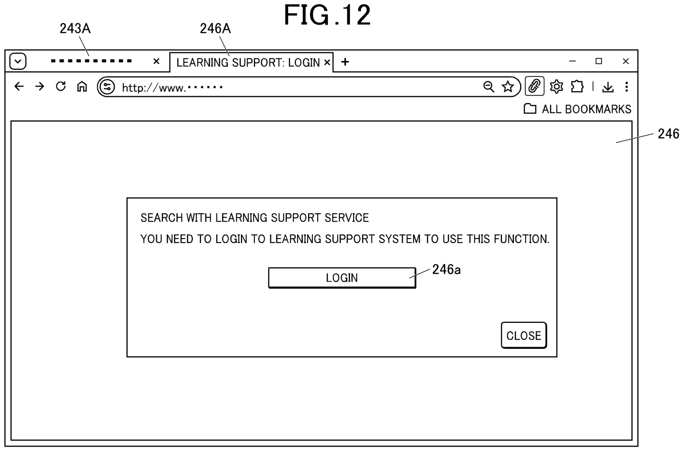

When the login session to the learning support service has expired and is invalid (Step S14: NO), the controller 11 opens a fourth tab 246A different from the first tab 243A on the browser of the terminal device 20, as shown in FIG. 12. In the fourth tab 246A, the controller 11 displays the login screen 246 for logging in to the learning support service (Step S19). When receiving a click operation on the login button 246a on the login screen 246 by the user via the operation receiver 23, the controller 11 receives an input operation of the user ID/group ID and password (account information) by the user via the operation receiver 23. Based on the received account information, the controller 11 performs login authentication for the user to log in to the learning support service (Step S20). The controller 11 then proceeds to Step S15 in the second search process.

As described above, in the second search process of this embodiment, the user does not need to select a dictionary content to use from the dictionary list 241a displayed on the menu screen 241 or manually input a character string to be searched for on the screen of the selected dictionary content, unlike in the first search process. By the second search process in this embodiment, the user can save time and effort for searching the dictionary contents for the character string displayed on the browser. Further, in the second search process of this embodiment, dictionary contents published by publishers are used for looking up the selected character string 243a. Therefore, the search results are more reliable than web search results.

The controller 11 may receive an operation of setting search target dictionary contents available to an account of a group ID in the second search process. For example, the controller 11 receives an operation of setting search target dictionary contents by a user, such as a teacher of an educational institution (an administrator who belongs to the group corresponding to the group ID). In this case, in Step S16, the controller 11 performs the search process of searching the search target dictionary contents that have been set by the user (e.g., teacher) for the headword corresponding to the selected character string 243a. According to such a configuration, when each school specifies the dictionary contents to be used in the search process, only the dictionary contents specified by the school can be used in looking up the selected character string 243a. That is, the search process with the dictionary contents can be performed according to the users and the usage situations of the learning support service of this embodiment (e.g., whether the service is used in individual self-study or group work at school).

As described above, according to the embodiment, the program causes the computer (controller 11) to function as a determination unit and a display controller. The determination unit determines whether a certain character string displayed on the browser has been selected by a user operation. When the determination unit determines that the character string has been selected, the display controller displays an instruction tool (search menu 243b) on the browser. The instruction tool (search menu 243b) allows the user to give an instruction to search the dictionary contents of the learning support system 1 for the selected character string (selected character string 243a). In this embodiment, the user does not need to select a dictionary content to be used from the dictionary list 241a displayed on the menu screen 241 or manually input the character string to be looked up on the screen of the selected dictionary content. Thus, the user can save time and effort in searching dictionaries for the character string displayed on the browser. Further, when the character string is selected, the search menu 243b for giving an instruction to look up the selected character string is displayed. This can reduce the processing load of the controller 11 and the communication amount between the server 10 and the terminal device 20. This can contribute to improving computer functionality. Further, displaying the search menu 243b reliably supports the user in performing a technical task (looking up the selected string) through human-machine interaction processing. That is, displaying the search menu 243b contributes to appropriate operations in selecting a character string using the dictionary contents of the learning support system 1.

In the program of this embodiment, a dictionary content includes a headword and information associated with the headword and corresponding to the headword. Since the dictionary contents are used to look up the character string selected on the browser (selected character string 243a), the search results are more reliable than the web search results.

According to the program of this embodiment, the dictionary contents are associated with the account that has logged in to the learning support system 1 (login account). Therefore, the dictionary contents available to the login account can be used to look up the character string selected on the browser (selected character string 243a).

According to the program of this embodiment, the program causes the computer (controller 11) to function as a search unit. When the instruction tool (search menu 243b) is selected by a user operation, the search unit searches the dictionary contents for the character string selected on the browser (selected character string 243a). Since the dictionary contents are used to look up the character string selected on the browser, the search results are more reliable than the web search results.

According to the program of this embodiment, the search unit (controller 11) searches the dictionary contents that have been set as search target dictionary contents beforehand for the character string selected on the browser (selected character string 243a). Therefore, when each school specifies the dictionary contents for the search process, only the dictionary contents specified by the school can be used in looking up the selected character string 243a.

According to the program of this embodiment, the display controller (controller 11) hides the instruction tool (search menu 243b) on the browser after an elapse of a predetermined time. By hiding the search menu 243b, the display controller prevents a situation in which information displayed on the browser is hidden by the search menu 243b. This prevents a decrease in usability for users who do not need dictionary search.

According to the program in this embodiment, in displaying a menu (other menu 243c) different from the instruction tool (search menu 243b) with respect to the character string selected on the browser (selected character string 243a), the display controller (controller 11) displays the instruction tool so as not to overlap the other menu 243c. This prevents a situation in which either the instruction tool (search menu 243b) or the other menu 243c is invisible.

According to the program of this embodiment, the display controller (controller 11) displays the instruction tool (search menu 243b) at the side opposite the other menu 243c with the character string selected on the browser (selected character string 243a) in between, or displays the instruction tool in a direction in which the distance between the selected character string and the window frame of the browser is longer. This prevents a situation in which either the instruction tool (search menu 243b) or the other menu 243c is invisible.

According to the program of this embodiment, when the user has not logged in to the learning support system 1 on the browser and when the instruction tool (search menu 243b) has been selected by a user operation, the display controller (controller 11) causes the browser to display the login screen 246 for the user to log in to the learning support system 1. Therefore, when the login session to the learning support service has expired and is invalid, the user is allowed to log in to the service via the login screen 246 and look up the character string selected on the browser (selected character string 243a).

According to the program of this embodiment, the display controller (controller 11) displays a certain explanation related to the learning support system 1 on the instruction tool (search menu 243b). This allows the user to easily grasp the function of the instruction tool.

In the above description, the storage 12 and the storage 22 (HDD, SSD) are used as examples of a computer-readable storage medium storing the program of the present disclosure. However, the present disclosure is not limited to these examples. The computer-readable medium may be a flash memory or a portable storage medium, such as a CD-ROM. Further, as a medium to provide data of the program related to the present disclosure via a communication line, a carrier wave can be used. The embodiment described above is an example of a program, information processing method, information processing apparatus, and information processing system according to the present disclosure and is not intended to limit the present disclosure. For example, in the above embodiment, the controller 11 of the server 10 serves as the determination unit and the display controller as an example. However, the controller 21 of the terminal device 20 may serve as the determination unit and the display controller. Although the embodiment of the present disclosure has been described, the scope of the present disclosure is not limited to the embodiment described above but includes the scope of the invention described in the claims and its equivalents.

## Claims

1. A program (121) that causes a computer (11) to function as a determination unit and a display controller, wherein:
the determination unit determines whether a certain character string (243a) displayed on a browser has been selected by an operation of a user, and
in response to the determination unit determining that the character string has been selected, the display controller causes the browser to display an instruction tool (243b) for giving an instruction to search a dictionary content of a learning support system (1) for the selected character string.

2. The program according to claim 1, wherein the dictionary content includes a headword and information corresponding to the headword and associated with the headword.

3. The program according to claim 1, wherein the dictionary content is associated with an account that has logged in to the learning support system.

4. The program according to claim 1, further causing the computer to function as a search unit, wherein
in response to the instruction tool being selected by an operation of the user, the search unit searches the dictionary content for the character string.

5. The program according to claim 4, wherein the search unit searches the dictionary content that has been determined as a search target beforehand for the character string.

6. The program according to claim 1, wherein the display controller hides the instruction tool on the browser after an elapse of a predetermined time.

7. The program according to claim 1, wherein in response to a menu (243c) different from the instruction tool (243b) with respect to the selected character string (243a) being displayed on the browser, the display controller displays the instruction tool such that the instruction tool does not overlap the menu.

8. The program according to claim 7, wherein:
the display controller displays the instruction tool at a side opposite the menu with the selected text string in between, or
the display controller displays the instruction tool in a direction in which a distance between the selected character string and a window frame of the browser is longer.

9. The program according to claim 1, wherein in response to determining that the user has not logged in to the learning support system on the browser and that the instruction tool has been selected by an operation of the user, the display controller causes the browser to display a login screen for the user to log in to the learning support system.

10. The program according to claim 1, wherein the display controller displays a predetermined explanation related to the learning support system on the instruction tool.

11. An information processing method to be performed by an information processing system (1), the method comprising:
a determination step of determining whether a certain character string (243a) displayed on a browser has been selected by an operation of a user; and
a display control step, wherein:
in response to determining that the character string has been selected in the determination step, in the display control step, data for displaying an instruction tool (243b) on the browser is generated, the instruction tool being for giving an instruction to search a dictionary content of a learning support system for the selected character string.

12. An information processing apparatus (10) comprising a determination unit (11) and a display controller (11), wherein:
the determination unit determines whether a certain character string (243a) displayed on a browser has been selected by an operation of a user, and
in response to the determination unit determining that the character string has been selected, the display controller generates data for displaying an instruction tool (243b) on the browser, the instruction tool being for giving an instruction to search a dictionary content of a learning support system for the selected character string.

13. An information processing system (1) comprising:
a terminal device (20) including a display (24) that displays a browser and an operation receiver (23) that receives an operation of a user; and
an information processing apparatus (10) that is communicably connected to the terminal device and that includes a determination unit (11) and a display controller (11), wherein:
the determination unit determines whether a certain character string (243a) displayed on the browser has been selected by the operation of the user, and
in response to the determination unit determining that the character string has been selected, the display controller generates data for displaying an instruction tool (243b) on the browser, the instruction tool being for giving an instruction to search a dictionary content of a learning support system for the selected character string.
